(19) Europäisches Patentamt

European Patent Office

Office européen des brevets

(11) **EP 2 871 895 B1**

(12) **EUROPEAN PATENT SPECIFICATION**

(45) Date of publication and mention
of the grant of the patent:
**14.09.2016 Bulletin 2016/37**

(51) Int Cl.:
***H04W 72/04*** *(2009.01)*

(21) Application number: **13192343.5**

(22) Date of filing: **11.11.2013**

(54) **Satellite link channel virtualization**

Satellitenverbindungskanalvirtualisierung

Virtualisation de canal de liaison par satellite

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.05.2015 Bulletin 2015/20**

(73) Proprietor: **ND SatCom Products GmbH
88090 Immenstaad (DE)**

(72) Inventors:
• **Lex, Josef
  88090 Immenstaad (DE)**
• **Jungblut, Bernd
  88709 Meersburg (DE)**

(74) Representative: **TBK
Bavariaring 4-6
80336 München (DE)**

(56) References cited:
**WO-A1-2013/002685     US-A- 5 748 624
US-A1- 2011 296 064**

• **B. Bjelajac: "Modellierung und
  Leistungsbewertung von mobilen
  Satellitensysteme mit dynamischer
  Kanalvergabe", ComNets - RWTH Aachen
  University, 1 January 1999 (1999-01-01), pages
  46-50, XP002722788, Aachen 1999 ISBN:
  978-3-86-073822-1 Retrieved from the Internet:
  URL:http://www.comnets.rwth-aachen.de/publ
  ications/dissertations/p/pdf/583/download. pdf
  [retrieved on 2014-04-02]**

Printed by Jouve, 75001 PARIS (FR)

**Description**

<u>Field</u>

The present invention relates to satellite link channel virtualization. More specifically, the present invention exemplarily relates to measures (including methods, apparatuses and computer program products) for realizing satellite link channel virtualization. The present invention is however not limited to satellite links but is also applicable in e.g. terrestrial wireless time division multiple access (TDMA) or multi frequency time division multiple access (MF-TDMA) networks.

<u>Background</u>

The present specification generally relates to integration of a satellite communication system into an IP communication system, in particular, to integration of the physical conditions of a satellite communication into a higher layer such as internet protocol (IP) based network. A satellite communication may implement time division multiple access (TDMA) or multi frequency time division multiple access (MF-TDMA).

In a standard approach, in an MF-TDMA system, different stations are grouped (either on receiver or transmitter side) to frequency channels. The time slots, i.e. transmission resource entities, are assigned by a central controlling device.

When there is the need to have multiple independent IP networks connected to one physical satellite communication network, different frequency channels are to be used for this. Otherwise an additional encapsulation layer becomes mandatory.

According to the above mentioned proposals, either additional coordination overhead or the need for additional hardware (e.g. multi-channel receiver) are caused. Alternatively, non-optimal network design with respect to assignment of hardware and satellite resources for the network may be a result.

Hence, the problem arises that there is a need to integrate MF-TDMA satellite communication networks into IP networks while maintaining the topology of the satellite communication network optimized to the physical channel properties and the available hardware and satellite resources.

Hence, there is a need to provide for satellite link channel virtualization.

Further prior art can be found in document WO 2013/002685 A1, disclosing scheduling of a user equipment in a radio communication system, wherein a radio base station operates an aggregated carrier in a subframe structure comprising a plurality of subframes. The aggregated carrier comprises a plurality of carriers. The radio base station encodes information about a subframe out of said plurality of subframes and a carrier out of said plurality of carriers into a message indicating scheduling information to a user equipment. The radio base station sends the message to the user equipment, which decodes the message to obtain the information about the transmission. The information about the transmission is indicative of the subframe and the carrier on which the transmission is scheduled.

Further prior art can be found in document "B. Bjelajac: 'Modellierung und Leistungsbewertung von mobilen Satellitensysteme mit dynamischer Kanalvergabe', ComNets - RWTH Aachen University, 1 January 1999 (1999-01-01), pages 46-50, XP002722788, Aachen 1999 ISBN: 978-3-86-073822-1, http://www.comnets.rwth-aachen.de/publications/dissertations/p/pdf/583/", disclosing simulation models and analytic methods to evaluate and compare traffic capacity and performance of mobile satellite systems with fixed and dynamic channel allocation. In particular, this document discloses physical channels and an access protocol according to which relationships between logical channels and the physical channels are established.

<u>Summary</u>

Various exemplary embodiments of the present invention aim at addressing at least part of the above issues and/or problems and drawbacks.

Various aspects of exemplary embodiments of the present invention are set out in the appended claims.

According to an exemplary aspect of the present invention, there is provided a method for controlling interfacing between at least one physical frequency channel comprising physical resources and at least one virtual communication channel comprising virtual resources, the method comprising setting assignment of assignable physical resources to said at least one virtual communication channel, wherein said assignable physical resources are physical resources considered for said assignment, and transmitting configuration information indicative of said assignment, wherein each of said at least one virtual communication channel is attributed with a predetermined share in each of said at least one physical frequency channel, respectively, and said setting is based on said respective predetermined share.

According to an exemplary aspect of the present invention, there is provided a method for interfacing between at least one physical frequency channel comprising physical resources and at least one virtual communication channel comprising virtual resources, the method comprising receiving configuration information indicative of assignment of assignable physical resources to said at least one virtual communication channel, wherein said assignable physical resources are physical resources considered for said assignment, and mapping said virtual resources onto said physical resources based on said configuration information, wherein each of said at least one virtual communication channel is attributed with a predetermined share in each of said at least one physical frequency channel, respectively, and said assignment of assignable physical resources to said at least one virtual communication channel is based on said respective predetermined share.

According to an exemplary aspect of the present invention, there is provided an apparatus for controlling interfacing between at least one physical frequency channel comprising physical resources and at least one virtual communication channel comprising virtual resources, the apparatus comprising setting means configured to set assignment of assignable physical resources to said at least one virtual communication channel, wherein said assignable physical resources are physical resources considered for said assignment, and transmitting means configured to transmit configuration information indicative of said assignment, wherein each of said at least one virtual communication channel is attributed with a predetermined share in each of said at least one physical frequency channel, respectively, and said setting means is configured to set based on said respective predetermined share.

According to an exemplary aspect of the present invention, there is provided an apparatus for interfacing between at least one physical frequency channel comprising physical resources and at least one virtual communication channel comprising virtual resources, the apparatus comprising receiving means configured to receive configuration information indicative of assignment of assignable physical resources to said at least one virtual communication channel, wherein said assignable physical resources are physical resources considered for said assignment, and mapping means configured to map said virtual resources onto said physical resources based on said configuration information, wherein each of said at least one virtual communication channel is attributed with a predetermined share in each of said at least one physical frequency channel, respectively, and said assignment of assignable physical resources to said at least one virtual communication channel is based on said respective predetermined share.

According to an exemplary aspect of the present invention, there is provided a computer program product comprising computer-executable computer program code which, when the program is run on a computer (e.g. a computer of an apparatus according to any one of the aforementioned apparatus-related exemplary aspects of the present invention), is configured to cause the computer to carry out the method according to any one of the aforementioned method-related exemplary aspects of the present invention.

Such computer program product may comprise or be embodied as a (tangible) computer-readable (storage) medium or the like on which the computer-executable computer program code is stored, and/or the program may be directly loadable into an internal memory of the computer or a processor thereof.

Advantageous further developments or modifications of the aforementioned exemplary aspects of the present invention are set out in the following.

Any one of the above aspects enables an efficient full virtualization of the TDMA network to thereby solve at least part of the problems and drawbacks identified in relation to the prior art. Thereby it is possible to optimize the frequency channel layout to the physical properties of the satellite channel and at the same time optimize the virtual channel layout to the network properties in which the satellite communication system is integrated.

By way of exemplary embodiments of the present invention, there is provided satellite link channel virtualization. More specifically, by way of exemplary embodiments of the present invention, there are provided measures and mechanisms for realizing satellite link channel virtualization.

Thus, improvement is achieved by methods, apparatuses and computer program products enabling/realizing satellite link channel virtualization.

Brief description of the drawings

In the following, the present invention will be described in greater detail by way of non-limiting examples with reference to the accompanying drawings, in which

Figure 1 is a block diagram illustrating an apparatus according to exemplary embodiments of the present invention,

Figure 2 is a block diagram illustrating an apparatus according to exemplary embodiments of the present invention,

Figure 3 is a schematic diagram of a procedure according to exemplary embodiments of the present invention,

Figure 4 is a schematic diagram of a procedure according to exemplary embodiments of the present invention,

Figure 5 is a schematic diagram illustrating a virtual channel overview according to exemplary embodiments of the present invention,

Figure 6 is a schematic diagram illustrating a network topology according to exemplary embodiments of the present invention,

Figure 7 is a schematic diagram illustrating an exemplary assignment of resources (resource allocation) according to exemplary embodiments of the present invention,

Figure 8 is a schematic diagram illustrating a state of an exemplary resource assignment procedure according to exemplary embodiments of the present invention,

Figure 9 is a schematic diagram illustrating a further state of an exemplary resource assignment procedure according to exemplary embodiments of the present invention,

Figure 10 is a schematic diagram illustrating a still further state of an exemplary resource assignment procedure according to exemplary embodiments of the present invention,

Figure 11 is a schematic diagram illustrating a still further state of an exemplary resource assignment procedure according to exemplary embodiments of the present invention,

Figure 12 is a schematic diagram illustrating a still further state of an exemplary resource assignment procedure according to exemplary embodiments of the present invention,

Figure 13 is a schematic diagram illustrating a state of an exemplary frame plan generation procedure according to exemplary embodiments of the present invention, and

Figure 14 is a block diagram alternatively illustrating apparatuses according to exemplary embodiments of the present invention.

Detailed description of drawings and embodiments of the present invention

The present invention is described herein with reference to particular non-limiting examples and to what are presently considered to be conceivable embodiments of the present invention. A person skilled in the art will appreciate that the invention is by no means limited to these examples, and may be more broadly applied.

It is to be noted that the following description of the present invention and its embodiments mainly refers to specifications being used as non-limiting examples for certain exemplary network configurations and deployments. Namely, the present invention and its embodiments are mainly described in relation to satellite communication systems. In particular, MF-TDMA based satellite communication is used as a non-limiting example for the applicability of thus described exemplary embodiments. As such, the description of exemplary embodiments given herein specifically refers to terminology which is directly related thereto. Such terminology is only used in the context of the presented non-limiting examples, and does naturally not limit the invention in any way. Rather, any other communication or communication related system deployment, etc. may also be utilized as long as compliant with the features described herein.

Hereinafter, various embodiments and implementations of the present invention and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to exemplary embodiments of the present invention, in general terms, there are provided measures and mechanisms for (enabling/realizing) satellite link channel virtualization.

According to exemplary embodiments, means and methods are disclosed, which enable the virtualization of the satellite link layer resources in a MF-TDMA satellite communication network. This is achieved according to embodiments of the present invention by providing virtual channels on the data link layer. Such implementation permits configurations for ensuring Class of Service (CoS), and further allows co-existence of fully independent traffic in one shared MF-TDMA layer using virtualized service access points (vSAP).

The present invention introduces virtual channels at a layer above the frequency channels of the MF-TDMA network.

These virtual channels serve as the new service access points, such that direct access to frequency channels is avoided.

According to the present invention, several virtual channels can be assigned to one or multiple frequency channels. The time slot (i.e. physical resources) assignment to transmitters is done based on the virtual channels. Configurations may be made individually for each virtual channel, i.e. CoS attributes may be specific for each vSAP.

The arbitration algorithms between the different virtual channels may also be configurable, such that prioritization, assignment of guaranteed resource share of the shared frequency channel, overbooking and reuse of otherwise unused bandwidth is feasible.

It is further possible to group virtual channels and thereby pooling their resources. In addition, it is possible to dynamically adapt MF-TDMA networks to changing physical channel properties without major effects to higher layers by using different virtual channel configurations depending on physical channel parameters.

Furthermore, according to exemplary embodiments of the present invention it is e.g. possible to run several IP networks over the same frequency channel instead of using a separate frequency channel for each. Any unwanted interdependencies, e.g. mutual blocking between the networks, can be avoided by configurable resource assignment policies.

According to exemplary embodiments of the present invention, furthermore, resources of different frequency channels may be pooled. In addition, some parameters as e.g. modulation scheme and code-rate can be configured individually for each virtual channel, thereby adapting that virtual channel to special needs of the corresponding VRF.

Configuration of each vSAP may change dynamically according to some embodiments of the present invention. Traffic from higher layers (IP packets) benefit from Class-of-Service (CoS) configuration given for each vSAP to individually process real-time vs. non-real-time traffic or enforce throughput limits per virtual channel.

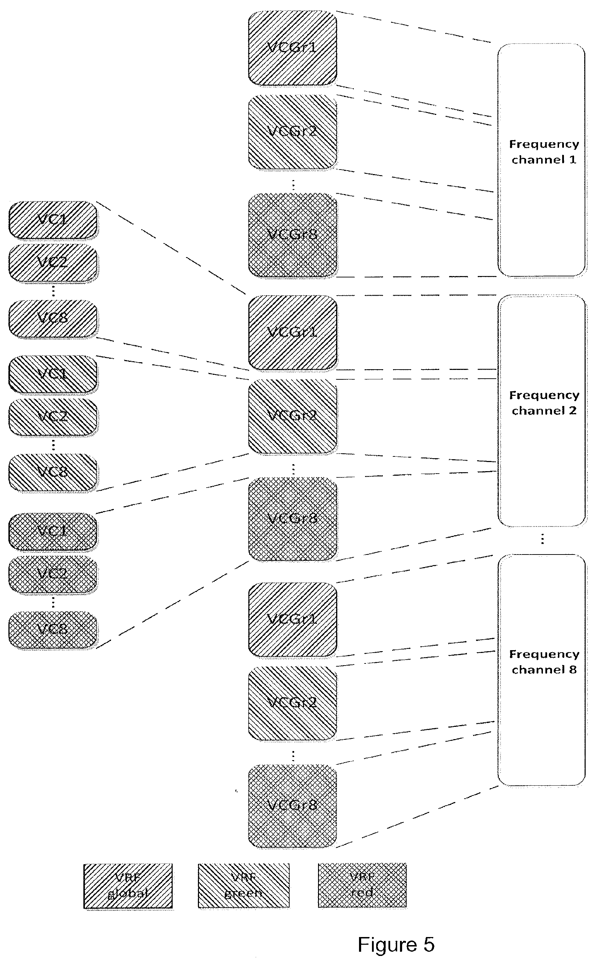

A virtual channel structure according to exemplary embodiments of the present invention is shown in Figure 5 illustrating a virtual channel overview. The virtual channel structure comprises two layers, the virtual channel group layer and the virtual channel layer.

For example, each layer may contain up to 8 elements, while only one element may be mandatory on each layer. Therefore in the simplest example configuration, the network may have one frequency channel, one virtual channel group (VC group, VCGr) with one virtual channel (VC). A frequency channel may be a TDMA frequency channel, i.e. a physical frequency channel implementing TDMA. A virtual channel group may be a group of virtual channels that are assigned to one virtual routing and forwarding (VRF) entity. Those groups may consist of one or more members. A virtual channel may be a member of a VCGr. Multiple VC per VCGr may be advantageous for an implementation of adaptive coding and modulation (ACM) in the systems according to exemplary embodiments of the present invention.

In the most complex configuration the network of Figure 5 may contain 8 frequency channels with 8 VC groups each and a total of 512 virtual channels. According to some embodiments of the present invention, each frequency channel may have to contain at least one virtual channel group, while not each VRF may have to have a corresponding VC group on each frequency channel.

The VC groups may be identified by a name to assign certain VC groups to one VRF and to group capacity from several frequency channels together by using same VCGr-name on different frequency channels.

It is noted that exemplary VCGr-names "global", "green" and "red" are used in Figure 5, which are also used throughout the further explanations, together with, e.g., VCGr name "blue". VCGr "global" is mandatory, because it is used for management traffic and ARP protocol.

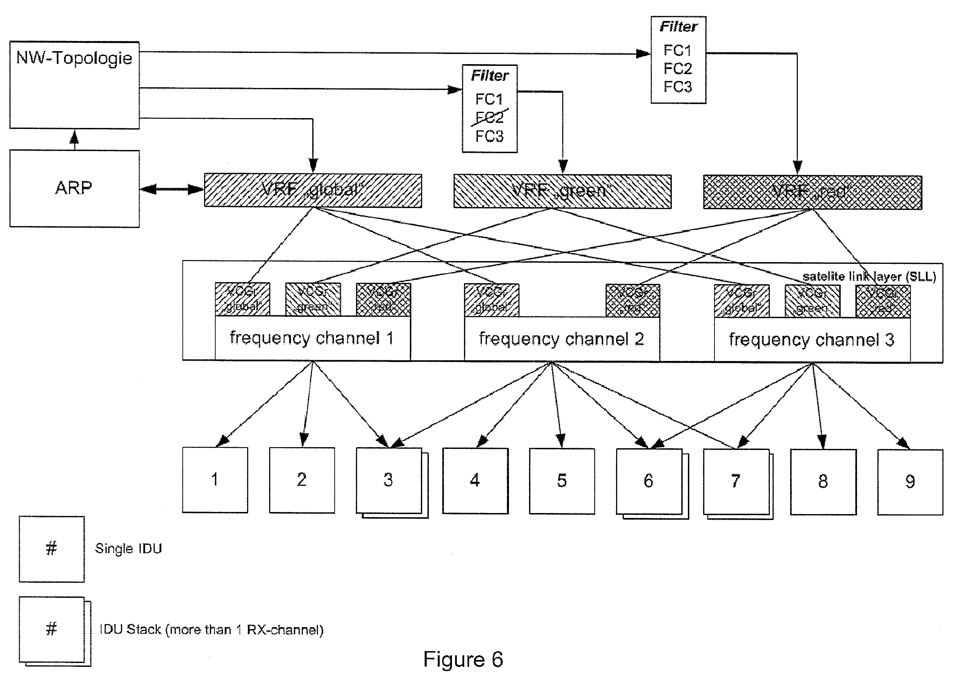

A network topology impacted by VC groups according to exemplary embodiments of the present invention is shown in Figure 6. Although the normal scenario is that the same VC groups are configured on all frequency channels (which means that the network topology would be the same on all VRFs), this may not be mandatory in order to keep the system as flexible as possible.

Especially in networks with a very heterogeneous structure (e.g. strongly different bandwidths on frequency channels), individual network topologies may be useful to minimize overhead. To avoid additional overhead by using separate instances of an address resolution protocol (ARP) entity on each VRF, the network topology is determined only once using the above mentioned global VRF, which is by definition existent on each VRF according to embodiments of the present invention. As can be seen on Figure 6, static or dynamic configuration specific routing filters may be applied to the global network topology to generate a VRF-specific topology.

One global VCGr may be named "global". According to exemplary embodiments of the present invention, this global VCGr may have to exist in every frequency channel. It is used e.g. for network management purposes. It may not be possible to rename this VCGr. According to exemplary embodiments of the present invention, a minimum resource share may be set and assigned to the global VCGr. As an example, a minimum of 10% resource share must be assigned to that VCGr to ensure that there are sufficient resources for management traffic. Note that these 10% are not wasted if there is less management traffic but can be assigned to other VC groups with channel-pool-assignment activated.

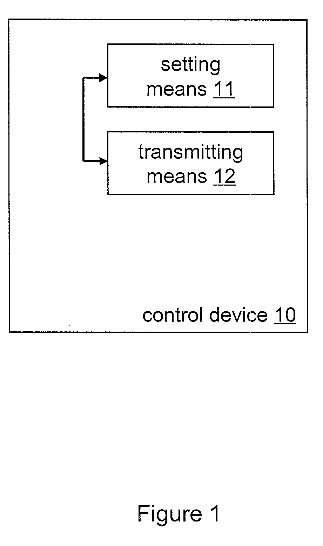

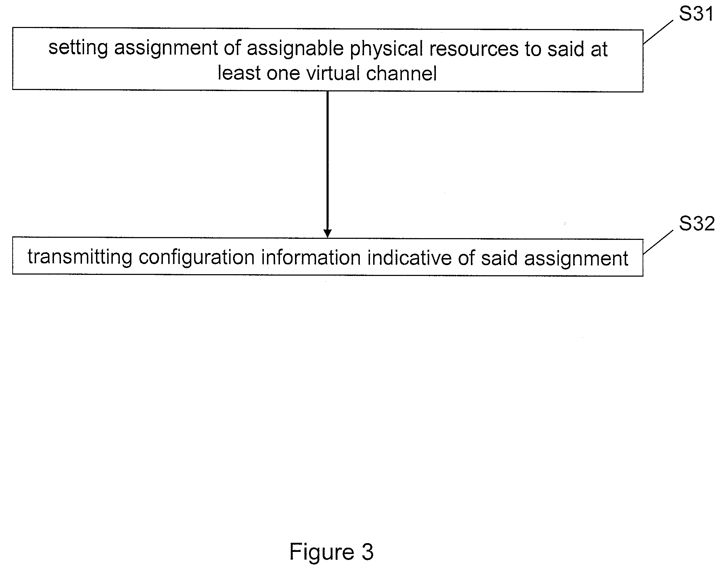

Figure 1 is a block diagram illustrating an apparatus according to exemplary embodiments of the present invention. The apparatus may be a control device 10 comprising a setting means 11 and a transmitting means 12. The setting means 11 sets assignment of assignable physical resources to said at least one virtual channel. The transmitting means 12 transmits configuration information indicative of said assignment. Figure 3 is a schematic diagram of a procedure according to exemplary embodiments of the present invention. The apparatus according to Figure 1 may perform the method of Figure 3 but is not limited to this method. The method of Figure 3 may be performed by the apparatus of Figure 1 but is not limited to being performed by this apparatus.

As shown in Figure 3, a procedure according to exemplary embodiments of the present invention comprises an operation of setting assignment of assignable physical resources to said at least one virtual channel, and an operation of transmitting configuration information indicative of said assignment.

According to a variation of the procedure shown in Figure 3, each of said at least one virtual communication channel is attributed with a predetermined share in each of said at least one physical frequency channel, respectively, and said setting is based on said respective predetermined share.

In other words, the resource share for each VCGr is configured individually for each VCGr. Thereby it is e.g. possible to assign VRF green (VCGr green) 30% of frequency channel 1, 40% of frequency channel 2 and 0% of frequency channel 3 and so on. VCGr other than VCGr "global" must have either channel pool assignment activated or also at least a resource share of at least 10% configured according to example embodiments of the present invention.

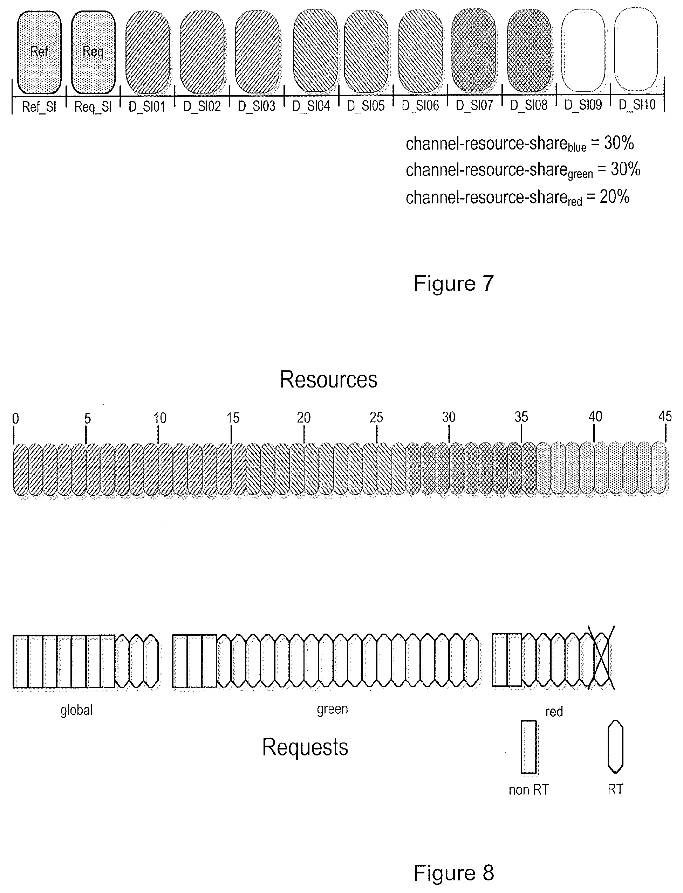

Figure 7 is a schematic diagram illustrating an exemplary assignment of resources (resource allocation) according to exemplary embodiments of the present invention. The assignment of slots may be done in a so called frame. The frame consists of a configurable number of data slots (used for data transmission), a reference slot and a request slot. The later ones are used for transmission of reference and request bursts, containing synchronization, signalization and management information. Data slots are differentiated into normal data slots and data slots reserved for real time traffic, so called "stream slots".

As is derivable from the example in Figure 7, the VCGr blue may have assigned 30%, VCGr green may have assigned 30%, while VCGr red may have assigned 20%, with the overall number of data slots of 10.

In Figure 7 the data slots assigned to a certain VCGr may or may not be sorted. A frame plan generator (FPG) described later on is free to arrange the data slots in any way to optimize the frame utilization.

Resources for non-real-time traffic are configured as percentage of the frequency channels overall user traffic resources.

When the sum of all virtual channel-resource-shares on one frequency channel is below 100%, an additional free slot pool is established. This can be assigned to any VCGr for which free slot pools assignment is activated, but it cannot be guaranteed for a certain VCGr. Free slot pools assignment is an attribute indicative of whether free physical resources, e.g. resources not assigned by configuration, may be assigned to the VCGr attributed therewith.

As can be further seen in Figure 7, time slots used for reference (Ref) and requests (Req) are not considered.

The resource share is configured in percent and not in data slots per frame. This is because it shall not be necessary to know the exact number of data slots per frame in advance.

However, returning to Figure 3, according to a variation of the procedure shown in Figure 3, exemplary details of the setting operation are given, which are inherently independent from each other as such.

Such exemplary setting operation according to exemplary embodiments of the present invention may comprise an operation of determining a number of physical resources to be assigned to each of said at least one virtual channel based on said respective predetermined share and a number of assignable physical resources.

Further, such exemplary setting operation according to exemplary embodiments of the present invention may comprise an operation of determining a number of free physical resources based on said each of said predetermined shares and a number of assignable physical resources.

Namely, the channel-resource-share value is related on the number of data slots per frame $n_{dstf}$. With this, the number of guaranteed slots in a frame for each frequency channel i and per VRF is calculated with

$$crs_{i,VRF} = \frac{channel-resource-share_{i,VRF}}{100\%}$$

$$crs_{i,free} = 1 - \sum_{VRF} crs_{i,VRF}$$

$$n_{slot_{raw\,i,VRF}} = crs_{i,VRF}\, n_{dstf_i}$$

$$n_{slot_{raw\,i,free}} = crs_{i,free}\, n_{dstf_i}$$

$$n_{slot_{i,VRF}} = \left\lfloor n_{slot_{raw_{i,VRF}}} \right\rfloor$$

$$n_{slot_{i,free}} = \left\lfloor n_{slot_{raw_{i,free}}} \right\rfloor$$

with $n_{slot,i,VRF}$ being the number of guaranteed data slots in a frame for frequency channel i and any VRF, and with $n_{slot,i,free}$ being the overall free data slots for frequency channel i.

As the above calculation includes a rounding down, residual fractions are calculated in order to consider the cropped fractions for the final determination of data slots by

$$n_{fract_{i,VRF}} = n_{slot_{raw_{i,VRF}}} - n_{slot_{i,VRF}}$$

$$n_{fract_{i,free}} = n_{slot_{raw_{i,free}}} - n_{slot_{i,free}}$$

such that the remaining data slots (remaining from the rounding down) can be calculated by

$$n_{rem,i} = n_{dstf_i} - n_{slot_{i,free}} - \sum_{VRF} n_{slot_{i,VRF}}$$

These remaining data slots are to be assigned as follows:

- Sort all VRFs (including the "free" VRF) by $n_{fract_{i,VRF}}$ in descending order.
- Increase $n_{slot_{i,VRF}}$ of the VCGr with the largest $n_{fract}$ by 1 and decrease $n_{rsm,i}$ by 1
- Go to the next VCGr, proceed as long as $n_{rsm,i}$ is >0

If a certain station gets more data slots for a VCGr than actually needed, according to exemplary embodiments of the present invention, it may use the excess slots in the same way as slots from free slot assignment. Management traffic may be prioritized for that assignment. This means if the corresponding queue on VCGr global is not empty, it gets assigned these otherwise not needed (excess) slots.

In the following, two examples for the allocation of data slots to VC groups are given.

In the first example, the VCGr global may have assigned 40%, VCGr green may have assigned 30%, while VCGr red may have assigned 30%, with the overall number of data slots per frame $n_{dstf}$ of 11.

In this example, one data slot corresponds to a resource share of approximately 9.1%, and the values and actually assigned data slots as determined by means of the above calculations are outlined in the following table.

Resource share calculation example

| VCGr | VRF | $n_{raw}$ | $n_{slot}$ | real share |
|------|--------|------|------|------------|
| 1 | global | 4.4 | 5 | 45% |
| 2 | green | 3.3 | 3 | 27% |
| 3 | red | 3.3 | 3 | 27% |
| SUM | | | 11 | |

In the second example, the VCGr global may have assigned 35%, VCGr green may have assigned 30%, while VCGr red may have assigned 25%, with the overall number of data slots per frame $n_{dstf}$ of 11 and a sum of channel-resource-share below 100%.

In this example, one data slot corresponds to a resource share of approximately 9.1%, and the values and actually assigned data slots as determined by means of the above calculations are outlined in the following table.

Resource share calculation example

| VCGr | VRF | $n_{raw}$ | $n_{slot}$ | real share |
|------|------|------|------|------|
| 1 | global | 3.85 | 4 | 36.4% |
| 2 | green | 3.3 | 3 | 27.3% |
| 3 | red | 2.75 | 3 | 27.3% |
| free | n.a. | 1.1 | 1 | 9.1% |
| SUM | | | 11 | |

According to a variation of the procedure shown in Figure 3, each of said at least one virtual communication channel is attributed with a predetermined configured maximum number of real time traffic resources.

Further, according to a variation of the procedure shown in Figure 3, exemplary details of the setting operation are given, which are inherently independent from each other as such.

Such exemplary setting operation according to exemplary embodiments of the present invention may comprise an operation of determining an available number of real time traffic resources for each of said at least one virtual communication channel based on said configured maximum number and a number of real time traffic resources already assigned to a respective one of said at least one virtual communication channel.

In other words, according to embodiments of the present invention, a maximum number of stream slots, i.e., of real time traffic slots (resources) is defined for each VCGr individually. If the number of stream slots exceeds the number of available data slots, the maximum number of stream slots is automatically limited to the thus maximum available number.

Stream slots can only be assigned to either the VCGr own data slots or to slots from the free slots pool. They cannot be assigned to unused data slots from other VCGr.

Reason thereof is that unused data slots belonging to other VCGr are guaranteed to the other VCGr, so if they are requested by the other VCGr, they must be given back to them immediately, e.g. in the next TDMA-frame or in the next generated frame plan. This may cause an unwanted abrupt discontinuation of a stream capacity. With $n_{stream_{max},conf_{i,VRF}}$ =stream-max$_{i,VRF}$, the actual maximum available number of stream slots for each VCGr is calculated:

$$n_{stream_{max},act_{i,VRF}} = \begin{cases} \min\left(n_{stream_{max},conf_{i,VRF}}, \left(n_{slot_{i,VRF}} + n_{slot_{i,free}}\right)\right) & if\ fspa_{i,VRF} \\ \min\left(n_{stream_{max},conf_{i,VRF}}, n_{slot_{i,VRF}}\right) & else \end{cases}$$

while $fspa_{i,VRF}$ corresponds to the activation or deactivation of free slot pools assignment for the respective VRF.

The number of stream slots assigned is strictly limited to the thus preliminarily determined value of a maximal number of stream slots.

Subsequently, a maximal available number of stream slots for each VRF is to be determined.

According to exemplary embodiments of the present invention, there may be no common stream slot pool for the whole frequency channel, but separate stream slot pools for each VCGr.

For the determination of the maximal available number of stream slots, two different situations are identified.

On the one hand, the configured maximum number of stream slots for a VCGr is smaller than its number of own (VCGr own) data slots. If this is the case the number of available data slots is calculated as follows:

$$n_{stream_{avail_{i,VRF}}} = n_{stream_{max,conf_{i,VRF}}} - n_{stream_{ass_{i,VRF}}}$$

On the other hand, the configured maximum number of stream slots for a VCGr may be higher than its number of own (VCGr own) data slots. In such case, it is to be checked if and how many additional data slots can be borrowed from the "free" slots, i.e. from slots collected in the free slots pool.

An additional slot can only be borrowed from the free slot pool in case two conditions fulfilled. Namely, free-slot-pools-assignment must be enabled for the respective VCGr, and the free slots pool must contain any data slots that are not already borrowed (i.e. assigned) to other VC groups.

According to some embodiments of the present invention, own data slots are used for stream slots before borrowing from the free slots pool. Further, borrowed data slots are given back first before releasing own data slots from the usage as stream slots.

For determination of the maximal available number of stream slots for each VRF, firstly, the remaining free data slots not already borrowed out are calculated.

$$n_{slot_{i},free,remain} = n_{slot_{i},free} - \sum_{VRF}\left(\left(n_{stream_{ass_{i},VRF}} - n_{slot_{i},VRF}\right) * \Theta\left(n_{stream_{ass_{i},VRF}} - n_{slot_{i},VRF}\right)\right)$$

With this, the additional available free slots can be calculated.

$$n_{slot,avail_{i},VRF} = max\left(n_{slot_{i},free,remain} + \left(n_{slot_{i},VRF} - n_{stream_{ass_{i},VRF}}\right), n_{slot_{i},free,remain}\right)$$
$$n_{stream_{avail_{i},VRF}} = min\left(n_{slot,avail_{i},VRF}, n_{stream_{max,conf_{i},VRF}} - n_{stream_{ass_{i},VRF}}\right)$$

As a result of the above presented approach according to exemplary embodiments of the present invention, the number of data slots (i.e. physical resources) to be assigned both for non real-time traffic and for real-time traffic individually to each of the VC groups (or to each of the VRFs) are determined.

Subsequently, those data slots are to be actually assigned according to the thus determined numbers.

Outlining that assignment according to exemplary embodiments of the present invention, firstly the data slots are to be assigned to a certain VCGr. When all data slots are assigned to a VCGr, the assignment to the stations is performed as usual (similar to standard approaches without the VCGr construct according to the present invention). Free slots may be assigned to the stations. Subsequently, all data slots are scheduled in the actual TDMA-frame. The FPG may apply optimization algorithms to get optimal frame utilization.

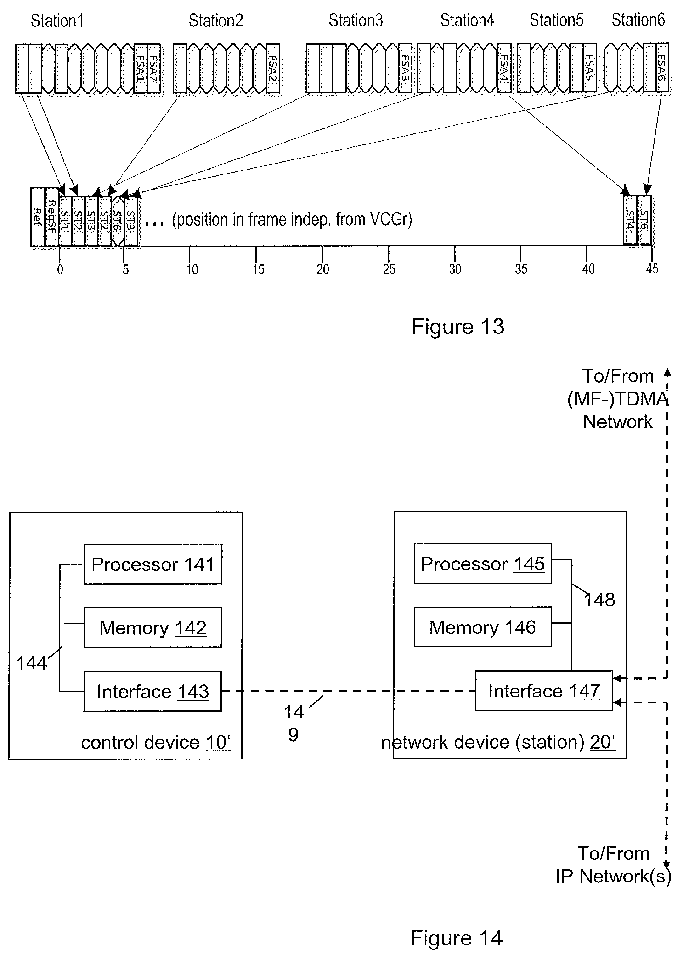

The data slot assignment according to exemplary embodiments of the present invention (as part of a frame plan generation) is described in detail also with reference to Figures 8 to 12, each illustrating a respective state of an exemplary resource assignment procedure according to exemplary embodiments of the present invention, and Figure 13 illustrating a state of an exemplary frame plan generation procedure according to exemplary embodiments of the present invention.

The example scenario underlying those Figures is presented in the following, and is to be considered as an illustrative example but not as limiting. That is, the present invention is also applicable to a scenario differing from the mentioned example scenario.

The example scenario is characterized by 45 data slots, 3 VC groups, 1 frequency channel, and 6 stations.

The general numbers of respective data slots and related quantities are given in the following table.

| configurati on | channel - resourc e-share | max real time slots | Free-slot-pool-assignme nt | $n_{raw}$ | $n_{slot}$ | |
|---|---|---|---|---|---|---|
| VCGr "global" | 35% | 15 | true | 15.75 | 16 | |
| VCGr "green" | 25% | 20 | true | 11.25 | 11 | |
| VCGr "red" | 20% | 5 | false | 9 | 9 | |
| "free" | 20% | | | 9 | 9 | |

Requested resources per station in the example scenario are illustrated in the following table.

| Station | VCGr "global" | | VCGr "green" | | VCGr "red" | | summary | |
|---|---|---|---|---|---|---|---|---|
| | non RT | RT | non RT | RT | non RT | RT | non RT | RT |
| 1 | 2 | 1 | 1 | 3 | 0 | 2 | 3 | 6 |
| 2 | 1 | 1 | 0 | 3 | 0 | 2 | 1 | 6 |
| 3 | 2 | 0 | 1 | 3 | 0 | 2 | 3 | 5 |
| 4 | 1 | 1 | 1 | 3 | 0 | 0 | 2 | 4 |
| 5 | 1 | 0 | 0 | 3 | 1 | 0 | 2 | 3 |
| 6 | 0 | 0 | 0 | 3 | 1 | 0 | 1 | 3 |

(continued)

| Station | VCGr "global" | | VCGr "green" | | VCGr "red" | | summary | |
|---|---|---|---|---|---|---|---|---|
| | non RT | RT | non RT | RT | non RT | RT | non RT | RT |
| | 7 | 3 | 3 | 18 | 2 | 5 (6) | | |
| step described in relation to Figure 8 | 10 | | 21 | | 7 | | | |

According to a variation of the procedure shown in Figure 3, exemplary additional operations and exemplary details of the setting operation are given, which are inherently independent from each other as such.

According to such variation, an exemplary method according to exemplary embodiments of the present invention may comprise an operation of collecting requests for physical resources.

Such exemplary setting operation according to exemplary embodiments of the present invention may comprise an operation of allocating said assignable physical resources to said requests based on said number of physical resources to be assigned to each of said at least one virtual communication channel, said number of free physical resources, said available number of real time traffic resources for each of said at least one virtual communication channel, and on an origin of each of said requests, respectively.

According to a variation of the procedure shown in Figure 3, exemplary details of the collecting operation are given, which are inherently independent from each other as such.

Such exemplary setting operation according to exemplary embodiments of the present invention may comprise an operation of receiving request information indicative of an amount of required resources for transmission.

In other words, as also shown in Figure 8, all requests within a VCGr from all stations are collected, including the stream slot requests. Stream slots exceeding the configured maximum number of stream slots of a VCGr are skipped.

It is noted that according to embodiments of the present invention all requests are to be done on virtual channel level. Therefore of course also the dynamic request control (DRC) algorithms must run on virtual channel level instead of frequency channel level. The DRC may be an algorithm for dynamic data slot request.

According to exemplary embodiments of the present invention, as a variation of the procedure shown in Figure 3, said allocating may be performed such that each request is served by physical resources to be assigned to said origin of said request.

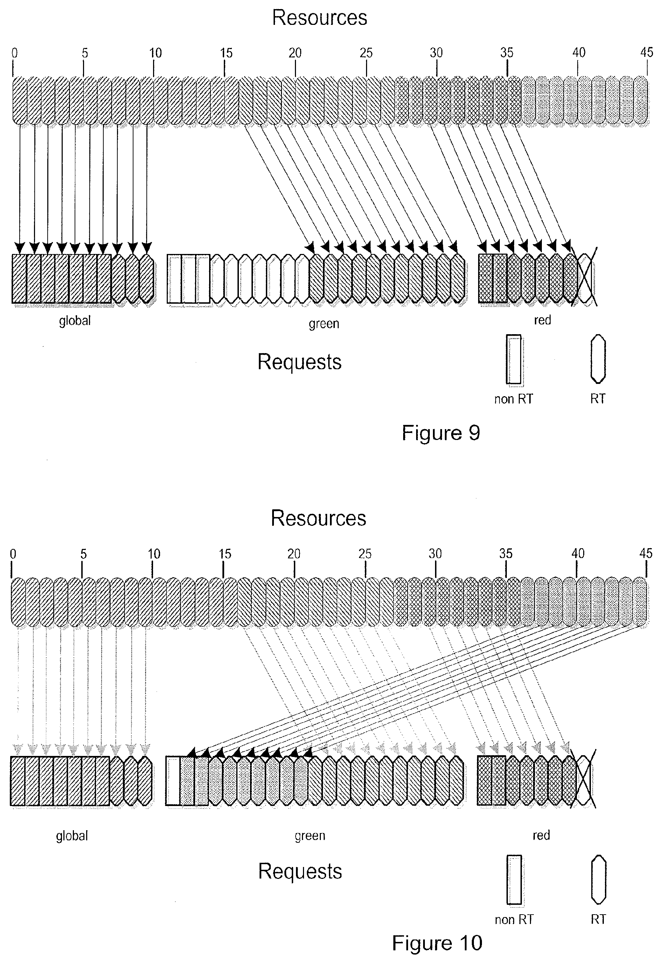

As shown in Figure 9, all requests are served (i.e. accomplished) - as far as possible - with data slots from the corresponding VCGr.

According to exemplary embodiments of the present invention, as a further variation of the procedure shown in Figure 3, each of said at least one virtual communication channel may be attributed as to whether said free physical resources may be assigned to the respective virtual communication channel.

Further, said allocating may then be performed such that each remaining request for a virtual communication channel for which said free physical resources may be assigned is served by said free physical resources.

In other words and as also illustrated in Figure 10, remaining requests are served with slots from the free slot pool. It is advantageous that for this step and from here on, only VC groups are considered, for which channel-pool-assignment is activated.

The serving the requests as shown in Figure 10 may according to exemplary embodiments of the present invention be performed in a round robin principle starting each TDMA-frame with another VCGr, so that over several frames no VCGr is preferred.

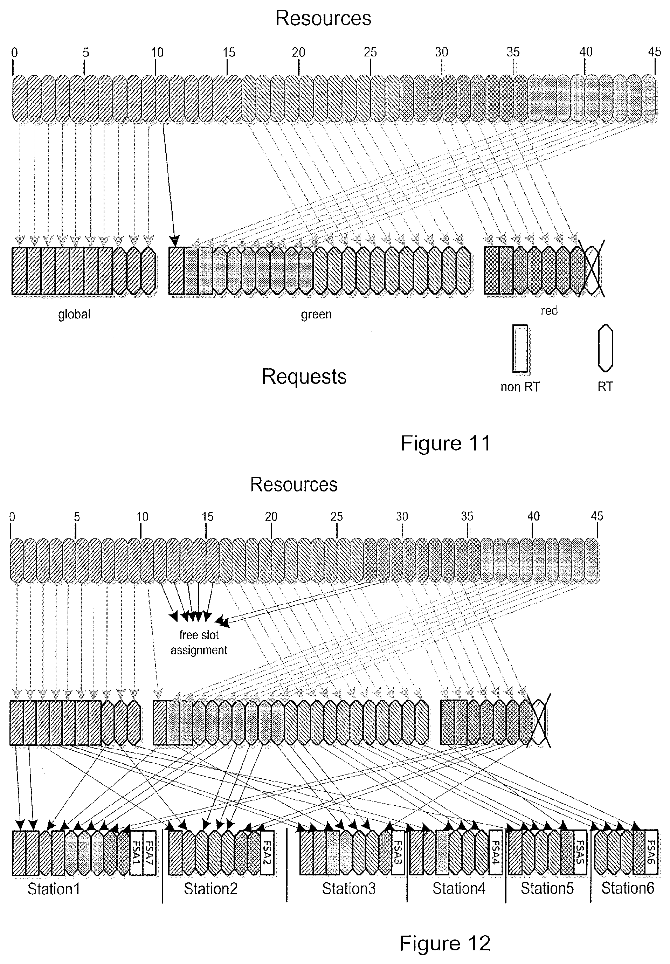

Figure 11 illustrates a further state of the exemplary resource assignment procedure.

While from here on, only requests for non-real-time slots are considered (if on a VCGr there are more real time requests than data slots assigned until now, its number of real time requests is reduced to the number of data slots it got already), if there are remaining requests, they are assigned to unused data slots from other VCGr.

As a result, each VCGr has its defined number of data slots. It has also a maximum number or real time slots, either from configuration or from the restriction that capacity borrowed from other VCGr are not allowed for real time traffic.

As can be seen on Figure 12, the data slots serving the requests are subsequently assigned to the respective requesting stations. Unused data slots are shifted to the free slot assignment (pool).

Further, Remaining unrequested data slots (either because there are no more requests or because the VCGr on which the requests are has channel-pool-assignment deactivated) are not assigned to a certain VCGr but are assigned to stations by free slot assignment. They can be used by the station for any non-real-time traffic occurring in the meantime on VCGr for which the *fspa* is activated.

As a result, each station has its assigned number of data slots.

According to a variation of the procedure shown in Figure 3, exemplary additional operations are given, which are inherently independent from each other as such. According to such variation, an exemplary method according to exemplary embodiments of the present invention may comprise an operation of scheduling, in a frame, each of said assigned physical resources assigned in said setting.

That is, the data slots assigned to each station are arranged within the TDMA-frame so that - as long as possible - no blocking with other frequency channels (a station is not able to send on more than one channel at the same time) occurs.

The actual position of a data slot within the TDMA-frame may according to the present invention be transparent to the VCGr.

The arranging of the assigned data slots within the TDMA frame is also illustrated in Figure 13.

With respect to the transmitting operation mentioned above the following is noted.

The available stream slots per VCGr are distributed to all stations. This information is used by Quality of Service (QoS) to decide whether additional stream requests are denied immediately or not. The available stream slots information must be distributed for every VCGr.

However, in order to avoid unnecessary overhead, according to some embodiments of the present invention, only values for really configured VCGr may be transmitted.

It is in this regard to be differed between the global frame plan and the regional frame plan distributed to the stations. The global frame plan contains scheduling information for each station. To avoid unnecessary overhead, regional frame plans are generated, containing only the frame plan information for the stations to which it is transmitted.

A frame plan generator firstly generates a global frame plan. From the thus generated global frame plan, the regional frame plans (to be transmitted via reference bursts to the respective stations) are generated.

Further, frame utilization and available capacity values on virtual channel level may be calculated and propagated.

In addition, throughput guarantees per VC may be enforced, and assignment of undrawn capacity to other virtual channels may be managed according to configurable policy.

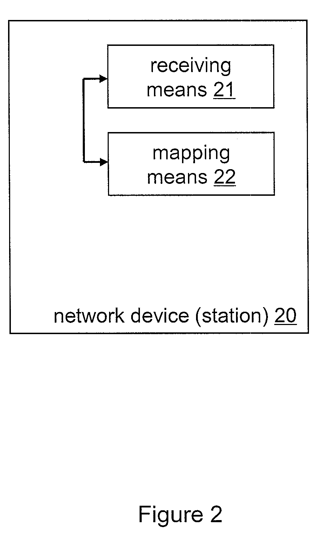

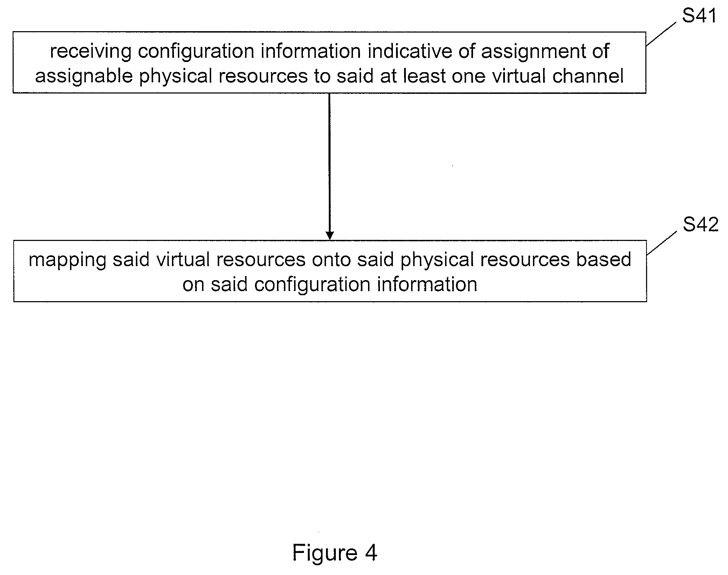

Figure 2 is a block diagram illustrating an apparatus according to exemplary embodiments of the present invention. The apparatus may be a network device 10 such as a station comprising a receiving means 21 and a mapping means 22. The receiving means 21 receives configuration information indicative of assignment of assignable physical resources to said at least one virtual channel. The mapping means 22 maps said virtual resources onto said physical resources based on said configuration information. Figure 4 is a schematic diagram of a procedure according to exemplary embodiments of the present invention. The apparatus according to Figure 2 may perform the method of Figure 4 but is not limited to this method. The method of Figure 4 may be performed by the apparatus of Figure 2 but is not limited to being performed by this apparatus.

As shown in Figure 4, a procedure according to exemplary embodiments of the present invention comprises an operation of receiving configuration information indicative of assignment of assignable physical resources to said at least one virtual channel, and an operation of mapping said virtual resources onto said physical resources based on said configuration information.

According to a variation of the procedure shown in Figure 4, exemplary details of the mapping operation are given, which are inherently independent from each other as such.

Such exemplary mapping operation according to exemplary embodiments of the present invention may comprise an operation of receiving data in a physical resource, and an operation of forwarding said data in a virtual resource assigned to said physical resource.

According to a variation of the procedure shown in Figure 4, exemplary details of the mapping operation are given, which are inherently independent from each other as such.

Such exemplary mapping operation according to exemplary embodiments of the present invention may comprise an operation of receiving data in a virtual resource, and an operation of forwarding said data in a physical resource assigned to said virtual resource.

According to a variation of the procedure shown in Figure 4, exemplary additional operations are given, which are inherently independent from each other as such. According to such variation, an exemplary method according to exemplary embodiments of the present invention may comprise an operation of transmitting request information indicative of an amount of required resources for transmission.

That is, according to exemplary embodiments of the present invention, a thus described station may be configured to map IP traffic to vSAP for satellite transmission via bursts, and to map data from received bursts to vSAPs.

Further, capacity requests per VC may be calculated, and time slots for virtual channel use may be requested according to configured assignment policies.

In addition, IP traffic may be encapsulated according to granted slots from the controlling device to transmit over the satellite communication system.

In sum, according to the present invention, virtual channels may be added at a layer above the frequency channels of a TDMA or MF-TDMA satellite communication system, whereby individual configuration of each virtual channel can be enabled.

The present invention further allows configuring CoS parameters per VC, enables individual treatment of real-time and non-real-time traffic, and may enable the configuration of resource assignment policies for the virtual channels.

The above-described procedures and functions may be implemented by respective functional elements, processors, or the like, as described below.

In the foregoing exemplary description of the network entity, only the units that are relevant for understanding the principles of the invention have been described using functional blocks. The network entity may comprise further units that are necessary for its respective operation. However, a description of these units is omitted in this specification. The arrangement of the functional blocks of the devices is not construed to limit the invention, and the functions may be performed by one block or further split into sub-blocks.

When in the foregoing description it is stated that the apparatus (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

In Figure 14, an alternative illustration of apparatuses according to exemplary embodiments of the present invention is depicted. As indicated in Figure 14, according to exemplary embodiments of the present invention, the apparatus (control device) 10' (corresponding to the control device 10) comprises a processor 141, a memory 142 and an interface 143, which are connected by a bus 144 or the like. Further, according to exemplary embodiments of the present invention, the network device (station) 20' (corresponding to the station 20) comprises a processor 145, a memory 146 and an interface 147, which are connected by a bus 148 or the like, and the apparatuses may be connected via link 149, respectively, while the station may be connected to an MF-TDMA network and to an IP network.

The processor 141/145 and/or the interface 143/147 may also include a modem or the like, and the interface 143/147 is generally configured to communicate with at least one other apparatus, i.e. the interface thereof.

The memory 142/146 may store respective programs assumed to include program instructions or computer program code that, when executed by the respective processor, enables the respective electronic device or apparatus to operate in accordance with the exemplary embodiments of the present invention.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

The processor (i.e. the at least one processor 141, with the at least one memory 142 and the computer program code) is configured to perform setting assignment of assignable physical resources to said at least one virtual channel (thus the apparatus comprising corresponding means for setting), and to perform transmitting configuration information indicative of said assignment (thus the apparatus comprising corresponding means for transmitting) in its most basic form.

The processor (i.e. the at least one processor 145, with the at least one memory 146 and the computer program code) is configured to perform receiving configuration information indicative of assignment of assignable physical resources to said at least one virtual channel (thus the apparatus comprising corresponding means for receiving), and to perform mapping said virtual resources onto said physical resources based on said configuration information (thus the apparatus comprising corresponding means for mapping) in its most basic form.

For further details regarding the operability/functionality of the individual apparatuses, reference is made to the above description in connection with any one of Figures 1 to 13, respectively.

The present invention also covers any conceivable combination of method steps and operations described above, and any conceivable combination of nodes, apparatuses, modules or elements described above, as long as the above-described concepts of methodology and structural arrangement are applicable.

In view of the above, there are provided measures for satellite link channel virtualization. Such measures exemplarily comprise setting assignment of assignable physical resources to said at least one virtual channel, and transmitting configuration information indicative of said assignment.

Even though the invention is described above with reference to the examples according to the accompanying drawings, it is to be understood that the invention is not restricted thereto. Rather, it is apparent to those skilled in the art that the present invention can be modified in many ways of the inventive idea as disclosed herein.

List of acronyms and abbreviations

| | |
|---|---|
| ACM | adaptive coding and modulation |
| ARP | address resolution protocol |
| CoS | Class of Service |
| DRC | dynamic request control |
| FPG | frame plan generator |
| IDU | indoor unit |
| IP | internet protocol |
| MF-TDMA | multi frequency time division multiple access |
| ODU | outdoor unit |
| QoS | Quality of Service |
| TDMA | time division multiple access |
| VC | virtual channel |
| VCGr | VC group, virtual channel group |
| VRF | virtual routing and forwarding |
| vSAP | using virtualized service access points |

**Claims**

1.  A method for controlling interfacing between at least one physical frequency channel comprising physical resources and at least one virtual communication channel, VC,
    comprising virtual resources, the method comprising
    setting (S31) assignment of assignable physical resources to said at least one virtual communication channel, VC, wherein said assignable physical resources are physical resources considered for said assignment, and
    transmitting (S32) configuration information indicative of said assignment
    **characterized in that**
    each of said at least one virtual communication channel, VC, is attributed with a predetermined share in each of said at least one physical frequency channel, respectively, and
    said setting (S31) is based on said respective predetermined share.

2.  The method according to claim 1, wherein
    in relation to said setting (S31), said method further comprises determining a number of physical resources to be assigned to each of said at least one virtual communication channel, VC, based on said respective predetermined share and a number of assignable physical resources.

3.  The method according to claim 1 or 2, wherein
    in relation to said setting (S31), said method further comprises determining a number of free physical resources based on said each of said predetermined shares and a number of assignable physical resources.

4.  The method according to claim 3, wherein
    each of said at least one virtual communication channel VC, is attributed with a predetermined configured maximum number of real time traffic resources, and
    said method further comprises
    determining an available number of real time traffic resources for each of said at least one virtual communication channel , VC,
    based on said configured maximum number and a number of real time traffic resources already assigned to a respective one of said at least one virtual communication channel , VC.

5.  The method according to claim 4, further comprising
    collecting requests for physical resources, and
    in relation to said setting (S31), said method further comprises allocating said assignable physical resources to said requests based on said number of physical resources to be assigned to each of said at least one virtual communication channel , VC,
    said number of free physical resources, said available number of real time traffic resources for each of said at least one virtual communication channel, VC,
and on an origin of each of said requests, respectively.

6. The method according to claim 5, wherein
in relation to said collecting, said method further comprises
receiving request information indicative of an amount of required resources for transmission.

7. The method according to claim 6, wherein
said allocating is performed such that each request is served by physical resources to be assigned to said origin of said request.

8. The method according to claim 7, wherein
each of said at least one virtual communication channel, VC, is attributed as to whether said free physical resources may be assigned to the respective virtual communication channel, VC, and
said allocating is performed such that each remaining request for a virtual communication channel, VC,
for which said free physical resources may be assigned is served by said free physical resources.

9. The method according to any of claims 1 to 8, further comprising
scheduling, in a frame, each of said assigned physical resources assigned in said setting (S31).

10. A method for interfacing between at least one physical frequency channel comprising physical resources and at least one virtual communication channel, VC,
comprising virtual resources, the method comprising
receiving (S41) configuration information indicative of assignment of assignable physical resources to said at least one virtual communication channel, VC,
wherein said assignable physical resources are physical resources considered for said assignment, and
mapping (S42) said virtual resources onto said physical resources based on said configuration information
**characterized in that**
each of said at least one virtual communication channel VC, is attributed with a predetermined share in each of said at least one physical frequency channel, respectively, and
said assignment of assignable physical resources to said at least one virtual communication channel, VC,
is based on said respective predetermined share.

11. The method according to claim 10, wherein
in relation to said mapping (S42), said method further comprises receiving data in a physical resource, and
forwarding said data in a virtual resource assigned to said physical resource.

12. The method according to claim 10 or 11, wherein
in relation to said mapping (S42), said method further comprises receiving data in a virtual resource, and
forwarding said data in a physical resource assigned to said virtual resource.

13. The method according to any of claims 10 to 12, further comprising
transmitting request information indicative of an amount of required resources for transmission.

14. An apparatus (10) for controlling interfacing between at least one physical frequency channel comprising physical resources and at least one virtual communication channel, VC,
comprising virtual resources, the apparatus (10) comprising
setting means (11) configured to set assignment of assignable physical resources to said at least one virtual communication channel, VC, wherein said assignable physical resources are physical resources considered for said assignment, and
transmitting means (12) configured to transmit configuration information indicative of said assignment
**characterized in that**
each of said at least one virtual communication channel, VC, is attributed with a predetermined share in each of said at least one physical frequency channel, respectively, and
said setting means (11) is configured to set based on said respective predetermined share.

15. The apparatus (10) according to claim 14, wherein
said setting means (11) is further configured to determine a number of physical resources to be assigned to each of said at least one virtual communication channel, VC, based on said respective predetermined share and a number of assignable physical resources.

16. The apparatus (10) according to claim 14 or 15, wherein
said setting means (11) is further configured to determine a number of free physical resources based on said each of said predetermined shares and a number of assignable physical resources.

17. The apparatus (10) according to claim 16, wherein
each of said at least one virtual communication channel, VC, is attributed with a predetermined configured maximum number of real time traffic resources, and
said apparatus (10) further comprises
determining means configured to determine an available number of real time traffic resources for each of said at least one virtual communication channel, VC,
based on said configured maximum number and a number of real time traffic resources already assigned to a respective one of said at least one virtual communication channel, VC.

18. The apparatus (10) according to claim 17, further comprising
collecting means configured to collect requests for physical resources, and
said setting means (11) is further configured to allocate said assignable physical resources to said requests based on said number of physical resources to be assigned to each of said at least one virtual communication channel, VC, said number of free physical resources, said available number of real time traffic resources for each of said at least one virtual communication channel, VC,
and on an origin of each of said requests, respectively.

19. The apparatus (10) according to claim 18, wherein
said collecting means comprises receiving means configured to receive request information indicative of an amount of required resources for transmission.

20. The apparatus (10) according to claim 19, wherein
said setting means (11) is configured to allocate such that each request is served by physical resources to be assigned to said origin of said request.

21. The apparatus (10) according to claim 20, wherein
each of said at least one virtual communication channel, VC, is attributed as to whether said free physical resources may be assigned to the respective virtual communication channel, VC, and
said setting means (11) is configured to allocate such that each remaining request for a virtual communication channel, VC,
for which said free physical resources may be assigned is served by said free physical resources.

22. The apparatus (10) according to any of claims 14 to 21, further comprising
scheduling means configured to schedule, in a frame, each of said assigned physical resources assigned by said setting means (11).

23. An apparatus (20) for interfacing between at least one physical frequency channel comprising physical resources and at least one virtual communication channel, VC,
comprising virtual resources, the apparatus (20) comprising
receiving means (21) configured to receive configuration information indicative of assignment of assignable physical resources to said at least one virtual communication channel, VC,
wherein said assignable physical resources are physical resources considered for said assignment, and
mapping means (22) configured to map said virtual resources onto said physical resources based on said configuration information,
**characterized in that**
each of said at least one virtual communication channel, VC, is attributed with a predetermined share in each of said at least one physical frequency channel, respectively, and
said assignment of assignable physical resources to said at least one virtual communication channel, VC,
is based on said respective predetermined share.

24. The apparatus (20) according to claim 23, wherein

said mapping means (22) is further configured to
control receiving data in a physical resource, and to
control forwarding said data in a virtual resource assigned to said physical resource.

25. The apparatus (20) according to claim 23 or 24, wherein
said mapping means (22) is further configured to
control receiving data in a virtual resource, and to
control forwarding said data in a physical resource assigned to said virtual resource.

26. The apparatus (20) according to any of claims 23 to 25, further comprising
transmitting means configured to transmit request information indicative of an amount of required resources for transmission.

27. A computer program product comprising computer-executable computer program code which, when the program is run on a computer, is configured to cause the computer to carry out the method according to any one of claims 1 to 9 or 10 to 13.

28. The computer program product according to claim 27, wherein the computer program product comprises a computer-readable medium on which the computer-executable computer program code is stored, and/or wherein the program is directly loadable into an internal memory of the processor.


**Patentansprüche**

1. Verfahren zur Steuerung eines Koppelns zwischen zumindest einem physikalischen Frequenzkanal mit physikalischen Ressourcen und zumindest einem virtuellen Kommunikationskanal, VC, mit virtuellen Ressourcen, wobei das Verfahren umfasst
ein Einstellen (S31) einer Zuordnung von zuordenbaren physikalischen Ressourcen zu dem zumindest einen virtuellen Kommunikationskanal, VC, wobei die zuordenbaren physikalischen Ressourcen für die Zuordnung berücksichtigte physikalische Ressourcen sind, und
ein Übertragen (S32) von auf die Zuordnung hinweisender Konfigurationsinformation,
**dadurch gekennzeichnet, dass**
jedem aus dem zumindest einen virtuellen Kommunikationskanal, VC, jeweils ein vorbestimmter Anteil an jedem des zumindest einen physikalischen Frequenzkanals zugeschrieben ist, und
das Einstellen (S31) auf dem jeweiligen vorbestimmten Anteil basiert.

2. Verfahren nach Anspruch 1, wobei
in Bezug auf das Einstellen (S31) das Verfahren ferner umfasst
ein Bestimmen einer Anzahl von jedem aus dem zumindest einen virtuellen Kommunikationskanal, VC, zuzuordnenden physikalischen Ressourcen basierend auf dem jeweiligen vorbestimmten Anteil und einer Anzahl von zuordenbaren physikalischen Ressourcen.

3. Verfahren nach Anspruch 1 oder 2, wobei
in Bezug auf das Einstellen (S31) das Verfahren ferner umfasst
ein Bestimmen einer Anzahl von freien physikalischen Ressourcen basierend auf jedem der vorbestimmten Anteile und einer Anzahl von zuordenbaren physikalischen Ressourcen.

4. Verfahren nach Anspruch 3, wobei
jedem aus dem zumindest einen virtuellen Kommunikationskanal, VC, eine vorbestimmte konfigurierte Maximalanzahl von Echtzeitverkehrsressourcen zugeschrieben ist, und
das Verfahren ferner umfasst
ein Bestimmen einer verfügbaren Anzahl von Echtzeitverkehrsressourcen für jeden aus dem zumindest einen virtuellen Kommunikationskanal, VC, basierend auf der konfigurierten Maximalanzahl und einer Anzahl von bereits einem jeweiligen aus dem zumindest einen virtuellen Kommunikationskanal, VC, zugeordneten Echtzeitverkehrsressourcen.

5. Verfahren nach Anspruch 4, ferner mit
einem Sammeln von Anforderungen für physikalische Ressourcen, wobei

in Bezug auf das Einstellen (S31) das Verfahren ferner umfasst

ein Zuweisen der zuordenbaren physikalischen Ressourcen zu den Anforderungen jeweils basierend auf der Anzahl von jedem aus dem zumindest einen virtuellen Kommunikationskanal, VC, zuzuordnenden physikalischen Ressourcen, der Anzahl von freien physikalischen Ressourcen, der verfügbaren Anzahl von Echtzeitverkehrsressourcen für jeden aus dem zumindest einen virtuellen Kommunikationskanal, VC, und einem Ursprung jeder der Anforderungen.

6.   Verfahren nach Anspruch 5, wobei
in Bezug auf das Sammeln das Verfahren ferner umfasst
ein Empfangen von Anforderungsinformation, die auf ein Ausmaß von für eine Übertragung benötigten Ressourcen hinweist.

7.   Verfahren nach Anspruch 6, wobei
das Zuweisen derart durchgeführt wird, dass jede Anforderung mittels dem Ursprung der Anforderung zuzuordnenden physikalischen Ressourcen bedient wird.

8.   Verfahren nach Anspruch 7, wobei
jedem aus dem zumindest einen virtuellen Kommunikationskanal, VC, zugeschrieben ist, ob die freien physikalischen Ressourcen zu dem jeweiligen virtuellen Kommunikationskanal, VC, zugeordnet werden können, und
das Zuweisen derart durchgeführt wird, dass jede verbleibende Anforderung für einen virtuellen Kommunikationskanal, VC, für den die freien physikalischen Ressourcen zugeordnet werden können, mittels der freien physikalischen Ressourcen bedient wird.

9.   Verfahren nach einem der Ansprüche 1 bis 8, ferner mit
einem Einplanen jeder der bei dem Einstellen (S31) zugeordneten zugeordneten physikalischen Ressourcen in einem Frame.

10.  Verfahren für ein Koppeln zwischen zumindest einem physikalischen Frequenzkanal mit physikalischen Ressourcen und zumindest einem virtuellen Kommunikationskanal, VC, mit virtuellen Ressourcen, wobei das Verfahren umfasst
ein Empfangen (S41) von Konfigurationsinformation, die auf eine Zuordnung von zuordenbaren physikalischen Ressourcen zu dem zumindest einen virtuellen Kommunikationskanal, VC, hinweist, wobei die zuordenbaren physikalischen Ressourcen für die Zuordnung berücksichtigte physikalische Ressourcen sind, und
ein Mappen (S42) der virtuellen Ressourcen auf die physikalischen Ressourcen basierend auf der Konfigurationsinformation,
**dadurch gekennzeichnet, dass**
jedem aus dem zumindest einen virtuellen Kommunikationskanal, VC, jeweils ein vorbestimmter Anteil an jedem des zumindest einen physikalischen Frequenzkanals zugeschrieben ist, und
die Zuordnung von zuordenbaren physikalischen Ressourcen zu dem zumindest einen virtuellen Kommunikationskanal, VC, auf dem jeweiligen vorbestimmten Anteil basiert.

11.  Verfahren nach Anspruch 10, wobei
in Bezug auf das Mappen (S42) das Verfahren ferner umfasst ein Empfangen von Daten in einer physikalischen Ressource, und
ein Weiterleiten der Daten in einer der physikalischen Ressource zugeordneten virtuellen Ressource.

12.  Verfahren nach Anspruch 10 oder 11, wobei
in Bezug auf das Mappen (S42) das Verfahren ferner umfasst ein Empfangen von Daten in einer virtuellen Ressource, und
ein Weiterleiten der Daten in einer der virtuellen Ressource zugeordneten physikalischen Ressource.

13.  Verfahren nach einem der Ansprüche 10 bis 12, ferner mit
einem Übertragen von Anforderungsinformation, die auf ein Ausmaß von für eine Übertragung benötigten Ressourcen hinweist.

14.  Vorrichtung (10) zur Steuerung eines Koppelns zwischen zumindest einem physikalischen Frequenzkanal mit physikalischen Ressourcen und zumindest einem virtuellen Kommunikationskanal, VC, mit virtuellen Ressourcen, wobei die Vorrichtung (10) umfasst
eine Einstelleinrichtung (11), die dazu eingerichtet ist, um eine Zuordnung von zuordenbaren physikalischen Ressourcen zu dem zumindest einen virtuellen Kommunikationskanal, VC, einzustellen, wobei die zuordenbaren physikalischen Ressourcen für die Zuordnung berücksichtigte physikalische Ressourcen sind, und
eine Übertragungseinrichtung (12), die dazu eingerichtet ist, um auf die Zuordnung hinweisende Konfigurationsinformation zu übertragen,
**dadurch gekennzeichnet, dass**
jedem aus dem zumindest einen virtuellen Kommunikationskanal, VC, jeweils ein vorbestimmter Anteil an jedem des zumindest einen physikalischen Frequenzkanals zugeschrieben ist, und
die Einstelleinrichtung (11) dazu eingerichtet ist, basierend auf dem jeweiligen vorbestimmten Anteil einzustellen.

15. Vorrichtung (10) nach Anspruch 14, wobei
die Einstelleinrichtung (11) ferner dazu eingerichtet ist, um eine Anzahl von jedem aus dem zumindest einen virtuellen Kommunikationskanal, VC, zuzuordnenden physikalischen Ressourcen basierend auf dem jeweiligen vorbestimmten Anteil und einer Anzahl von zuordenbaren physikalischen Ressourcen zu bestimmen.

16. Vorrichtung (10) nach Anspruch 14 oder 15, wobei
die Einstelleinrichtung (11) ferner dazu eingerichtet ist, um eine Anzahl von freien physikalischen Ressourcen basierend auf jedem der vorbestimmten Anteile und einer Anzahl von zuordenbaren physikalischen Ressourcen zu bestimmen.

17. Vorrichtung (10) nach Anspruch 16, wobei
jedem aus dem zumindest einen virtuellen Kommunikationskanal, VC, eine vorbestimmte konfigurierte Maximalanzahl von Echtzeitverkehrsressourcen zugeschrieben ist, und
die Vorrichtung (10) ferner umfasst
eine Bestimmungseinrichtung, die dazu eingerichtet ist, um eine verfügbare Anzahl von Echtzeitverkehrsressourcen für jeden aus dem zumindest einen virtuellen Kommunikationskanal, VC, basierend auf der konfigurierten Maximalanzahl und einer Anzahl von bereits einem jeweiligen aus dem zumindest einen virtuellen Kommunikationskanal, VC, zugeordneten Echtzeitverkehrsressourcen zu bestimmen.

18. Vorrichtung (10) nach Anspruch 17, ferner mit
einer Sammeleinrichtung, die dazu eingerichtet ist, um Anforderungen für physikalische Ressourcen zu sammeln, wobei
die Einstelleinrichtung (11) ferner dazu eingerichtet ist, um die zuordenbaren physikalischen Ressourcen zu den Anforderungen jeweils basierend auf der Anzahl von jedem aus dem zumindest einen virtuellen Kommunikationskanal, VC, zuzuordnenden physikalischen Ressourcen, der Anzahl von freien physikalischen Ressourcen, der verfügbaren Anzahl von Echtzeitverkehrsressourcen für jeden aus dem zumindest einen virtuellen Kommunikationskanal, VC, und einem Ursprung jeder der Anforderungen zuzuweisen.

19. Vorrichtung (10) nach Anspruch 18, wobei
die Sammeleinrichtung eine Empfangseinrichtung umfasst, die dazu eingerichtet ist, um Anforderungsinformation, die auf ein Ausmaß von für eine Übertragung benötigten Ressourcen hinweist, zu empfangen.

20. Vorrichtung (10) nach Anspruch 19, wobei
die Einstelleinrichtung (11) dazu eingerichtet ist, um derart zuzuweisen, dass jede Anforderung mittels dem Ursprung der Anforderung zuzuordnenden physikalischen Ressourcen bedient wird.

21. Vorrichtung (10) nach Anspruch 20, wobei
jedem aus dem zumindest einen virtuellen Kommunikationskanal, VC, zugeschrieben ist, ob die freien physikalischen Ressourcen zu dem jeweiligen virtuellen Kommunikationskanal, VC, zugeordnet werden können, und
die Einstelleinrichtung (11) dazu eingerichtet ist, um derart zuzuweisen, dass jede verbleibende Anforderung für einen virtuellen Kommunikationskanal, VC, für den die freien physikalischen Ressourcen zugeordnet werden können, mittels der freien physikalischen Ressourcen bedient wird.

22. Vorrichtung (10) nach einem der Ansprüche 14 bis 21, ferner mit
einer Einplaneinrichtung, die dazu eingerichtet ist, um jede der durch die Einstelleinrichtung (11) zugeordneten zugeordneten physikalischen Ressourcen in einem Frame einzuplanen.

23. Vorrichtung (20) für ein Koppeln zwischen zumindest einem physikalischen Frequenzkanal mit physikalischen Ressourcen und zumindest einem virtuellen Kommunikationskanal, VC, mit virtuellen Ressourcen, wobei die Vorrichtung (20) umfasst

eine Empfangseinrichtung (21), die dazu eingerichtet ist, um Konfigurationsinformation zu empfangen, die auf eine Zuordnung von zuordenbaren physikalischen Ressourcen zu dem zumindest einen virtuellen Kommunikationskanal, VC, hinweist, wobei die zuordenbaren physikalischen Ressourcen für die Zuordnung berücksichtigte physikalische Ressourcen sind, und

eine Mapeinrichtung (22), die dazu eingerichtet ist, um die virtuellen Ressourcen auf die physikalischen Ressourcen basierend auf der Konfigurationsinformation zu mappen,

**dadurch gekennzeichnet, dass**

jedem aus dem zumindest einen virtuellen Kommunikationskanal, VC, jeweils ein vorbestimmter Anteil an jedem des zumindest einen physikalischen Frequenzkanals zugeschrieben ist, und

die Zuordnung von zuordenbaren physikalischen Ressourcen zu dem zumindest einen virtuellen Kommunikationskanal, VC, auf dem jeweiligen vorbestimmten Anteil basiert.

24. Vorrichtung (20) nach Anspruch 23, wobei

die Mapeinrichtung (22) ferner dazu eingerichtet ist, um

einen Empfang von Daten in einer physikalischen Ressource zu steuern, und

ein Weiterleiten der Daten in einer der physikalischen Ressource zugeordneten virtuellen Ressource zu steuern.

25. Vorrichtung (20) nach Anspruch 23 oder 24, wobei

die Mapeinrichtung (22) ferner dazu eingerichtet ist, um

einen Empfang von Daten in einer virtuellen Ressource zu steuern, und

ein Weiterleiten der Daten in einer der virtuellen Ressource zugeordneten physikalischen Ressource zu steuern.

26. Vorrichtung (20) nach einem der Ansprüche 23 bis 25, ferner mit

einer Übertragungseinrichtung, die dazu eingerichtet ist, um Anforderungsinformation, die auf ein Ausmaß von für eine Übertragung benötigten Ressourcen hinweist, zu übertragen.

27. Computerprogrammprodukt mit einem computerausführbaren Computerprogrammcode, der dazu eingerichtet ist, um, wenn das Programm auf einem Computer läuft, den Computer dazu zu bringen, das Verfahren nach einem der Ansprüche 1 bis 9 oder 10 bis 13 durchzuführen.

28. Computerprogrammprodukt nach Anspruch 27, wobei das Computerprogrammprodukt ein computerlesbares Medium umfasst, auf dem der computerausführbare Computerprogrammcode gespeichert ist, und/oder wobei das Programm direkt in einen internen Speicher des Prozessors ladbar ist.

**Revendications**

1. Procédé pour commander l'interfaçage entre au moins un canal de fréquence physique comprenant des ressources physiques et au moins un canal de communication virtuel, VC, comprenant des ressources virtuelles, le procédé comprenant

l'établissement (S31) d'une assignation de ressources physiques assignables audit au moins un canal de communication virtuel, VC, où lesdites ressources physiques assignables sont des ressources physiques considérées pour ladite assignation, et

la transmission (S32) d'informations de configuration indicatives de ladite assignation

**caractérisé en ce que**

chacun dudit au moins un canal de communication virtuel, VC, se voit attribuer une part prédéterminée dans chacun dudit au moins un canal de fréquence physique, respectivement, et

ledit établissement (S31) est basé sur ladite part prédéterminée respective.

2. Procédé selon la revendication 1, dans lequel

par rapport audit établissement (S31), ledit procédé comprend en outre

la détermination d'un nombre de ressources physiques à assigner à chacun dudit au moins un canal de communication virtuel, VC, sur la base de ladite part prédéterminée respective et d'un nombre de ressources physiques assignables.

3. Procédé selon la revendication 1 ou 2, dans lequel par rapport audit établissement (S31), ledit procédé comprend en outre

la détermination d'un nombre de ressources physiques libres sur la base de ladite chacune desdites parts prédéterminées et d'un nombre de ressources physiques assignables.

4. Procédé selon la revendication 3, dans lequel

chacun dudit au moins un canal de communication virtuel, VC, se voit attribuer un nombre maximum configuré prédéterminé de ressources de trafic en temps réel, et

ledit procédé comprend en outre

la détermination d'un nombre disponible de ressources de trafic en temps réel pour chacun dudit au moins un canal de communication virtuel, VC, sur la base dudit nombre maximum configuré et d'un nombre de ressources de trafic en temps réel déjà assignées à l'un respectif dudit au moins un canal de communication virtuel, VC.

5. Procédé selon la revendication 4, comprenant en outre la collecte de demandes pour des ressources physiques, et par rapport audit établissement (S31), ledit procédé comprend en outre

l'allocation desdites ressources physiques assignables auxdites demandes sur la base dudit nombre de ressources physiques à assigner à chacun dudit au moins un canal de communication virtuel, VC, dudit nombre de ressources physiques libres, dudit nombre disponible de ressources de trafic en temps réel pour chacun dudit au moins un canal de communication virtuel, VC, et d'une origine de chacune desdites demandes, respectivement.

6. Procédé selon la revendication 5, dans lequel

par rapport à ladite collecte, ledit procédé comprend en outre

la réception d'informations de demande indicatives d'une quantité de ressources requises pour la transmission.

7. Procédé selon la revendication 6, dans lequel

ladite allocation est effectuée de sorte que chaque demande soit desservie par des ressources physiques à assigner à ladite origine de ladite demande.

8. Procédé selon la revendication 7, dans lequel

chacun dudit au moins un canal de communication virtuel, VC, est attribué quant à si lesdites ressources physiques libres peuvent être assignées au canal de communication virtuel, VC, respectif, et

ladite allocation est effectuée de sorte que chaque demande restante pour un canal de communication virtuel, VC, pour lequel lesdites ressources physiques libres peuvent être assignées soit desservie par lesdites ressources physiques libres.

9. Procédé selon l'une quelconque des revendications 1 à 8, comprenant en outre

l'ordonnancement, dans une trame, de chacune desdites ressources physiques assignées assignées lors dudit établissement (S31).

10. Procédé pour l'interfaçage entre au moins un canal de fréquence physique comprenant des ressources physiques et au moins un canal de communication virtuel, VC, comprenant des ressources virtuelles, le procédé comprenant

la réception (S41) d'informations de configuration indicatives d'une assignation de ressources physiques assignables audit au moins un canal de communication virtuel, VC, où lesdites ressources physiques assignables sont des ressources physiques considérées pour ladite assignation, et

le mappage (S42) desdites ressources virtuelles sur lesdites ressources physiques sur la base desdites informations de configuration

**caractérisé en ce que**

chacun dudit au moins un canal de communication virtuel, VC, se voit attribuer une part prédéterminée dans chacun dudit au moins un canal de fréquence physique, respectivement, et

ladite assignation de ressources physiques assignables audit au moins un canal de communication virtuel, VC, est basée sur ladite part prédéterminée respective.

11. Procédé selon la revendication 10, dans lequel

par rapport audit mappage (S42), ledit procédé comprend en outre

la réception de données dans une ressource physique, et le transfert desdites données dans une ressource virtuelle assignée à ladite ressource physique.

12. Procédé selon la revendication 10 ou 11, dans lequel par rapport audit mappage (S42), ledit procédé comprend en outre

la réception de données dans une ressource virtuelle, et le transfert desdites données dans une ressource physique assignée à ladite ressource virtuelle.

13. Procédé selon l'une quelconque des revendications 10 à 12, comprenant en outre
   la transmission d'informations de demande indicatives d'une quantité de ressources requises pour la transmission.

14. Appareil (10) pour commander l'interfaçage entre au moins un canal de fréquence physique comprenant des ressources physiques et au moins un canal de communication virtuel, VC, comprenant des ressources virtuelles, l'appareil (10) comprenant
   des moyens d'établissement (11) configurés pour établir une assignation de ressources physiques assignables audit au moins un canal de communication virtuel, VC, où lesdites ressources physiques assignables sont des ressources physiques considérées pour ladite assignation, et
   des moyens de transmission (12) configurés pour transmettre des informations de configuration indicatives de ladite assignation
   **caractérisé en ce que**
   chacun dudit au moins un canal de communication virtuel, VC, se voit attribuer une part prédéterminée dans chacun dudit au moins un canal de fréquence physique, respectivement, et
   lesdits moyens d'établissement (11) sont configurés pour établir sur la base de ladite part prédéterminée respective.

15. Appareil (10) selon la revendication 14, dans lequel lesdits moyens d'établissement (11) sont en outre configurés pour déterminer un nombre de ressources physiques à assigner à chacun dudit au moins un canal de communication virtuel, VC, sur la base de ladite part prédéterminée respective et d'un nombre de ressources physiques assignables.

16. Appareil (10) selon la revendication 14 ou 15, dans lequel
   lesdits moyens d'établissement (11) sont en outre configurés pour déterminer un nombre de ressources physiques libres sur la base de ladite chacune desdites parts prédéterminées et d'un nombre de ressources physiques assignables.

17. Appareil (10) selon la revendication 16, dans lequel chacun dudit au moins un canal de communication virtuel, VC, se voit attribuer un nombre maximum configuré prédéterminé de ressources de trafic en temps réel, et
   ledit appareil (10) comprend en outre
   des moyens de détermination configurés pour déterminer un nombre disponible de ressources de trafic en temps réel pour chacun dudit au moins un canal de communication virtuel, VC, sur la base dudit nombre maximum configuré et d'un nombre de ressources de trafic en temps réel déjà assignées à l'un respectif dudit au moins un canal de communication virtuel, VC.

18. Appareil (10) selon la revendication 17, comprenant en outre
   des moyens de collecte configurés pour collecter des demandes pour des ressources physiques, et
   lesdits moyens d'établissement (11) sont en outre configurés pour allouer lesdites ressources physiques assignables auxdites demandes sur la base dudit nombre de ressources physiques à assigner à chacun dudit au moins un canal de communication virtuel, VC, dudit nombre de ressources physiques libres, dudit nombre disponible de ressources de trafic en temps réel pour chacun dudit au moins un canal de communication virtuel, VC, et d'une origine de chacune desdites demandes, respectivement.

19. Appareil (10) selon la revendication 18, dans lequel lesdits moyens de collecte comprennent des moyens de réception configurés pour recevoir des informations de demande indicatives d'une quantité de ressources requises pour la transmission.

20. Appareil (10) selon la revendication 19, dans lequel
   lesdits moyens d'établissement (11) sont configurés pour allouer de sorte que chaque demande soit desservie par des ressources physiques à assigner à ladite origine de ladite demande.

21. Appareil (10) selon la revendication 20, dans lequel
   chacun dudit au moins un canal de communication virtuel, VC, est attribué quant à si lesdites ressources physiques libres peuvent être assignées au canal de communication virtuel, VC, respectif, et
   lesdits moyens d'établissement (11) sont configurés pour allouer de sorte que chaque demande restante pour un canal de communication virtuel, VC, pour lequel lesdites ressources physiques libres peuvent être assignées soit desservie par lesdites ressources physiques libres.

**22.** Appareil (10) selon l'une quelconque des revendications 14 à 21, comprenant en outre
des moyens d'ordonnancement configurés pour ordonnancer, dans une trame, chacune desdites ressources physiques assignées assignées par lesdits moyens d'établissement (11).

**23.** Appareil (20) pour l'interfaçage entre au moins un canal de fréquence physique comprenant des ressources physiques et au moins un canal de communication virtuel, VC, comprenant des ressources virtuelles, l'appareil (20) comprenant
des moyens de réception (21) configurés pour recevoir des informations de configuration indicatives d'une assignation de ressources physiques assignables audit au moins un canal de communication virtuel, VC, où lesdites ressources physiques assignables sont des ressources physiques considérées pour ladite assignation, et
des moyens de mappage (22) configurés pour mapper lesdites ressources virtuelles sur lesdites ressources physiques sur la base desdites informations de configuration,
**caractérisé en ce que**
chacun dudit au moins un canal de communication virtuel, VC, se voit attribuer une part prédéterminée dans chacun dudit au moins un canal de fréquence physique, respectivement, et
ladite assignation de ressources physiques assignables audit au moins un canal de communication virtuel, VC, est basée sur ladite part prédéterminée respective.

**24.** Appareil (20) selon la revendication 23, dans lequel
lesdits moyens de mappage (22) sont en outre configurés pour
commander la réception de données dans une ressource physique, et
commander le transfert desdites données dans une ressource virtuelle assignée à ladite ressource physique.

**25.** Appareil (20) selon la revendication 23 ou 24, dans lequel
lesdits moyens de mappage (22) sont en outre configurés pour
commander la réception de données dans une ressource virtuelle, et
commander le transfert desdites données dans une ressource physique assignée à ladite ressource virtuelle.

**26.** Appareil (20) selon l'une quelconque des revendications 23 à 25, comprenant en outre
des moyens de transmission configurés pour transmettre des informations de demande indicatives d'une quantité de ressources requises pour la transmission.

**27.** Produit de programme informatique comprenant un code de programme informatique exécutable par ordinateur qui, lorsque le programme est exécuté sur un ordinateur, est configuré pour amener l'ordinateur à effectuer le procédé selon l'une quelconque des revendications 1 à 9 ou 10 à 13.

**28.** Produit de programme informatique selon la revendication 27, dans lequel le produit de programme informatique comprend un support lisible par ordinateur sur lequel le code de programme informatique exécutable par ordinateur est stocké, et/ou dans lequel le programme est chargeable directement dans une mémoire interne du processeur.

EP 2 871 895 B1

Figure 1

Figure 2

setting assignment of assignable physical resources to said at least one virtual channel    S31

transmitting configuration information indicative of said assignment    S32

Figure 3

receiving configuration information indicative of assignment of assignable physical resources to said at least one virtual channel

mapping said virtual resources onto said physical resources based on said configuration information

Figure 4

EP 2 871 895 B1

Figure 5

Figure 6

28

channel-resource-share$_{blue}$ = 30%
channel-resource-share$_{green}$ = 30%
channel-resource-share$_{red}$ = 20%

Figure 7

Resources

Requests

Figure 8

## Resources

Figure 9

## Resources

Figure 10

Resources

global green red

non RT RT

Requests

Figure 11

Resources

free slot assignment

Station1 Station2 Station3 Station4 Station5 Station6

FSA7 FSA1 FSA2 FSA3 FSA4 FSA5 FSA6

Figure 12

Station1    Station2    Station3    Station4    Station5    Station6

... (position in frame indep. from VCGr)

Figure 13

To/From
(MF-)TDMA
Network

Processor 141

Memory 142

Interface 143

144

control device 10'

149

Processor 145

148

Memory 146

Interface 147

network device (station) 20'

To/From
IP Network(s)

Figure 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013002685 A1

**Non-patent literature cited in the description**

- **B. BJELAJAC.** Modellierung und Leistungsbewertung von mobilen Satellitensysteme mit dynamischer Kanalvergabe. *ComNets - RWTH Aachen University,* 01 January 1999, ISBN 978-3-86-073822-1, 46-50, http://www.comnets.rwth-aachen.de/publications/dissertations/p/pdf/583